# EUROPÄISCHE PATENTSCHRIFT

(11) **EP 0 518 174 B1**
(45) Veröffentlichungstag und Bekanntmachung des Hinweises auf die Patenterteilung: **04.01.1995**
(21) Anmeldenummer: 92109243.3
(22) Anmeldetag: 02.06.1992
(51) Int. Cl.: E03F 3/06, F16L 55/162

(54) **Verfahren und Vorrichtung zum Auskleiden der Innenwand eines Kanalrohres**
Method and apparatus for applying a coating to the inner surface of a pipe
Procédé et dispositif pour le revêtement de la surface interne d'un tuyau

(30) Priorität: 11.06.1991 DE 4119161
(43) Veröffentlichungstag der Anmeldung: 16.12.1992
(73) Patentinhaber: Werner & Pfleiderer GmbH, 70469 Stuttgart (DE)
(72) Erfinder: Hinger, Klaus-Jürgen, Dr., W-7000 Stuttgart 1 (DE)
(74) Vertreter: Rau, Manfred, Dr. Dipl.-Ing.

(56) Entgegenhaltungen:
- DE-A- 3 627 556
- DE-A- 3 931 775
- DE-A- 4 031 741
- FR-A- 2 579 294
- GB-A- 2 133 497

## Beschreibung

Die Erfindung betrifft ein Verfahren nach dem Oberbegriff des Anspruches 1 und eine Vorrichtung zur Durchführung des Verfahrens nach dem Oberbegriff des Anspruches 4.

Die öffentliche Kanalisation ist in erheblichem Umfang schadhaft bzw. undicht, und zwar etwa zu 15 bis 2o%. Daraus resultieren erhebliche Umweltbelastungen, und zwar insbesondere für das Grund- und Trinkwasser. Für die Behebung dieser Schäden sind sehr große Aufwendungen erforderlich.

Aus dem Buch von Stein und Niederehe, "Instandhaltung von Kanalisationen" Ernst & Sohn Verlag, Berlin 1987, Seiten 3o8 bis 317 sind zahlreiche Verfahren zur Instandsetzung oder Sanierung schadhafter Kanalrohre bekannt, bei denen eine Abdichtung der im Erdreich befindlichen Kanalrohre vorgenommen wird.

Beim sogenannten Injektionsverfahren erfolgt die Abdichtung undichter Rohrverbindungen durch eine Injektion von Acrylharzen in das Rohr. Bei einem Abdichtungsverfahren werden Dichtungsmanschetten manuell in das Kanalrohr eingelegt und mittels Spannbändern aus Stahl gegen die Innenwand des Kanalrohres angepreßt. Bei einem Beschichtungsverfahren wird ein definierter Ringraum mit Hilfe einer wiederverwendbaren und mit Abstandshaltern versehenen Schlauchschalung erzeugt, der mit Zementmörtel ausgepreßt wird. Bei einem weiteren Beschichtungsverfahren wird Zementmörtel zwischen einen Preßkolben und einen Verdrängungskörper eingebracht. Beim Durchziehen dieser Vorrichtung durch das Kanalrohr wird der Mörtel vom Verdrängungskörper an die Rohrwand gepreßt. Bei einem weiteren Beschichtungsverfahren wird Beschichtungsmaterial durch einen schnell rotierenden Schleuderkopf an die Innenwand des Kanalrohres geschleudert.

Beim sogenannten Rohrstrang-Relining wird ein Kunststoffrohr in das zu sanierende Kanalrohr eingezogen, wodurch sich der Kanalquerschnitt stark verkleinert. Der verbleibende Ringraum wird verfüllt. Zur Herstellung von Durchbrechungen in dem durchgehenden Kunststoffrohr an Haus- und Straßenanschlüssen müssen Baugruben ausgehoben werden.

Beim sogenannten Kurzrohr-Relining werden kurze Einzelrohre über einen Inspektionsschacht einzeln in ein zu sanierendes Kanalrohr eingeschoben. Hierbei verkleinert sich der Kanalquerschnitt ebenfalls. Der verbleibende Ringraum wird in der Regel verfüllt. Zur Herstellung von Haus- und Straßenanschlüssen müssen Baugruben geschaffen werden.

Beim sogenannten Wickelrohr-Relining werden vorort aus Kunststoff-Profilstreifen hergestellte Wickelrohre mit Kreisquerschnitt in das zu sanierende Kanalrohr eingeschoben. Der Ringraum wird in der Regel verfüllt.

Beim sogenannten Schlauch-Relining wird ein mit Kunstharz getränkter vorkonfektionierter Filzschlauch als Band in das zu sanierende Kanalrohr eingeführt und durch Innendruck an die Innenwand des Kanalrohres angepreßt. Die Erhärtung erfolgt in situ durch Wärmezufuhr. Haus- und Straßenanschlüsse müssen ausgefräst werden.

Aus der GB-A-2 133 497 ist eine Vorrichtung zum Abdichten eines Lecks in der Wand eines Rohres, z.B. einer Gas-Hauptleitung, bekannt. Diese bekannte Vorrichtung umfaßt ein Fahrzeug, das sich im Innenraum des Rohres bewegt und mit Einrichtungen zum Aufbringen einer aushärtbaren Dichtflüssigkeit auf die Innenwand des Rohres und zum Glätten der aufgebrachten Flüssigbeschichtung versehen ist. Als Dichtflüssigkeit wird ein Zweikomponenten-Polymer-Gemisch verwendet.

Aus der DE-A-36 27 556 ist ein Verfahren und eine Vorrichtung zur Kanalsanierung bekannt, wobei die Innenwand des Kanals mit einem Mehrkomponenten-Material-Gemisch ausgekleidet wird. Bei dieser Art der Sanierung wird im Kanalrohr ein Mischwagen und ein daran angekoppelter Bearbeitungswagen mit einem Bearbeitungskopf verfahren. Die Materialzufuhr erfolgt von einem an der Erdoberfläche stehenden Bedienungs-und Gerätefahrzeug über mindestens zwei Materialzuführschläuche.

Der Erfindung liegt die Aufgabe zugrunde, ein Verfahren der gattungsgemäßen Art zu schaffen, mittels dessen eine Auskleidung eines schadhaften Kanalrohres unter geringstmöglicher Durchmesserreduzierung des ausgekleideten Kanalrohres in möglichst einfacher Weise erreichbar ist, und eine Vorrichtung zur Durchführung dieses Verfahrens anzugeben.

Diese Aufgabe wird bei einem Verfahren der gattungsgemäßen Art durch die Merkmale im Kennzeichnungsteil des Anspruches 1 gelöst. Durch das erfindungsgemäße Verfahren wird auf die Innenwand des im Erdreich befindlichen zu sanierenden Kanalrohres unmittelbar ein Kunststoffrohr extrudiert. Das Kunststoffrohr wird also in situ erzeugt. Hierdurch können nicht nur schadhafte Rohre, z.B. Risse und Ausbrüche im Rohr und undichte Rohrmuffen abgedichtet werden; das Kunststoffrohr hat auch eine hohe Abstützwirkung, übernimmt also auch die tragende Funktion des Rohres. Durch die Sanierung wird der oberirdische Verkehrsfluß auf der Straße nicht merklich beeinträchtigt. Kanalrohre aus Stahlbeton erhalten eine erhöhte Korrosions- und Errosionsbeständigkeit. Der Abwasserfluß wird durch die hohe Oberflächenglätte der Innenseite des Kunststoffrohres verbessert. Der Durchmesser des sanierten Kanalrohres wird nur um die Wanddicke des Auskleidungs-Rohres reduziert. Aus diesem Grunde ist das erfindungsgemäße Verfahren auch mehrmals wiederholbar. Es ist auch bei größeren Schäden, wie Rohrbruch, Rohrversatz, Rohrabwinklung anwendbar. Durch die zumindest teilweise erfolgende vorherige Trocknung der Innenwand des Kanalrohres wird die Haftung des Schlauches und damit des Auskleidungsrohres an der Innenwand des Kanalrohres besonders günstig gestaltet. Durch die Weiterbildung nach Anspruch 2 wird eine intensive Verbindung mit der Innenwand des Kanalrohres bei gleichzeitiger und anschließender Abkühlung erreicht. Durch die Weiterbildung nach Anspruch 3 wird in einfacher Weise erreicht, daß Anschlüsse für Häuser oder Straßen ausgespart werden, so daß hier keine Nachbearbeitung nötig ist.

Die der Erfindung zugrundeliegende Aufgabe wird bei einer Vorrichtung der gattungsgemäßen Art durch die Merkmale im Kennzeichnungsteil des Anspruches 4 gelöst. Das erfindungsgemäße Verfahren kann demzufolge mit einem eigenständig in einem Kanalrohr verfahrbaren Extruder ausgeführt werden, wobei in sehr einfacher Weise ein Vortrocknen und Vorwärmen der Innenwand des Kanalrohres erreicht wird, wobei dieses Trocknen und Vorwärmen durch die zum Granulattransport dienende Druckluft erfolgen kann. Nach Anspruch 5 kann eine eigenständige Vorschubeinheit vorgesehen sein. Durch die Weiterbildung nach den Ansprüchen 6 und 7 wird in einfacher Weise sichergestellt, daß der extrudierte Kunststoffschlauch fest gegen die Innenwand des Kanalrohres gepreßt und dort zu einem Auskleidungs-Rohr abgekühlt wird.

Die weitere Ausgestaltung nach Anspruch 8 führt dazu, daß das Auskleidungs-Rohr je nach Bedarf unterschiedliche Wanddicken erhalten kann, wobei nach der besonders vorteilhaften Ausgestaltung nach Anspruch 9 erreicht wird, daß die Wanddicken auch über den Umfang unterschiedlich verändert werden können, d.h. im Bereich von Ausbrüchen od.dgl. kann das Auskleidungs-Rohr eine zusätzliche Verdickung erhalten.

Die Versorgung des Extruders mit Kunststoffmaterial erfolgt vorteilhafterweise mittels eines Kunststoff-Bandes, dessen Einzug der Extruder eine angepaßte Einzugsöffnung aufweist. Um das Band granulieren zu können, sind Schneckenelemente mit schneidenden Zähnen vorgesehen. Wird der Extruder mit Kunststoffgranulat gefüttert, so wird dieses vorteilhafterweise pneumatisch in der Druckluftleitung bis zur Einzugsöffnung transportiert. Durch eine Schneckenrückwärtsentgasung läßt sich Granulat und Luft in dem Einzugsteil der Schnecken trennen.

Eine Bestandsaufnahme im zu sanierenden Kanalrohr und eine Überwachung der durchzuführenden Arbeiten läßt sich in besonders einfacher Weise durch eine Fernsehkamera realisieren. Um die Vorrichtung auch durch relativ enge Inspektionsschächte in ein Kanalrohr einbringen zu können, sind die Maßnahmen nach Anspruch 10 vorgesehen.

Die Weiterbildung nach Anspruch 11 ermöglicht es, an Haus- oder Straßenanschlüssen die Extrusion eines Schlauches kurzzeitig ganz zu unterbrechen, oder eine Aussparung in dem Kunststoffschlauch auszubilden.

Anspruch 13 gibt eine Ausgestaltung einer eigenständigen Vorschubeinheit wieder, wobei die weitere Ausgestaltung der Fahrwerke nach Anspruch 14 im Hinblick auf die unebenen Oberflächen der Kanalrohre besonders vorteilhaft ist. Anspruch 19 gibt eine konstruktiv und hinsichtlich der Kosten besonders einfache Ausgestaltung einer eigenständigen Vorschubeinheit wieder.

Weitere Einzelheiten, Vorteile und Merkmale der Erfindung ergeben sich aus der nachfolgenden Beschreibung eines Ausführungsbeispieles anhand der Zeichnung. Es zeigt
- Fig. 1: ein zu sanierendes Kanalrohr mit einer Vorrichtung nach der Erfindung in überwiegend aufgebrochener Darstellung,
- Fig. 2: einen Teil-Längs-Schnitt durch eine Vorschubeinheit der Vorrichtung, und zwar insbesondere durch deren Fahrwerke,
- Fig. 3: einen Querschnitt durch die Fahrwerke der Vorschubeinheit entsprechend der Schnittlinie III-III in Fig. 2,
- Fig. 4: einen Teil-Längs-Schnitt durch einen Extruder der Vorrichtung,
- Fig. 5: einen Querschnitt durch den Extruder entsprechend der Schnittlinie V-V in Fig. 4,
- Fig. 6: einen Längsschnitt durch eine Rohr-Düse der Vorrichtung,
- Fig. 7: einen Querschnitt durch die Rohr-Düse gemäß der Schnittlinie VII-VII in Fig. 6 und
- Fig. 8: eine abgewandelte Ausführungsform einer erfindungsgemäßen Vorrichtung in einer Fig. 1 entsprechenden Darstellung.

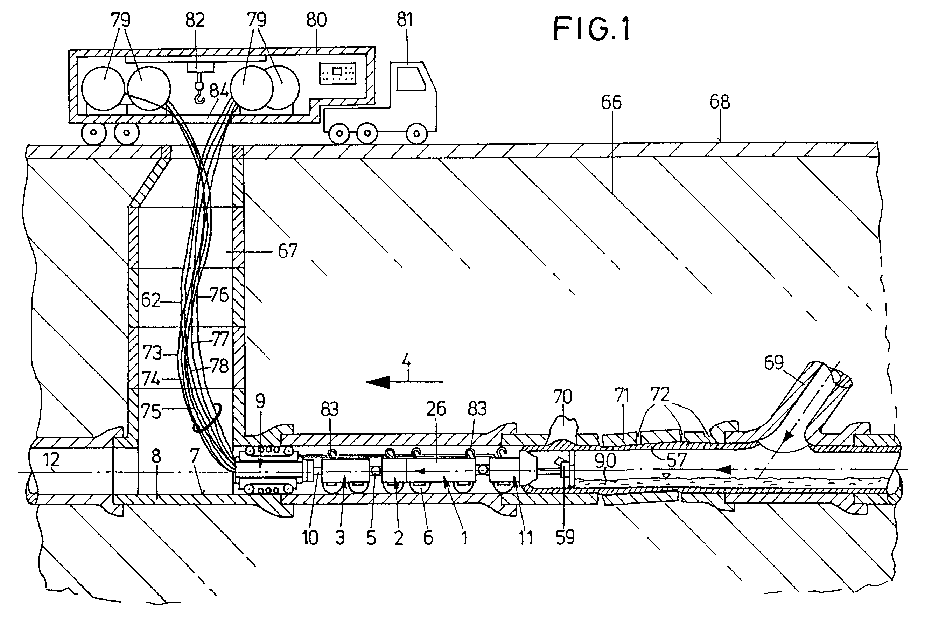

Die in der Zeichnung dargestellte Vorrichtung weist - wie insbesondere aus Fig. 1 hervorgeht - einen Zwei-Wellen-Extruder 1 auf, dem unter Zwischenschaltung eines Getriebes 2 ein als Hydromotor ausgebildeter Extruder-Antriebsmotor 3 in Arbeitsrichtung 4 vorgeordnet ist. Während das Getriebe 2 fest am Extruder 1 angeflanscht ist, ist der Antriebsmotor 3 mittels einer Wellenkupplung 5 mit dem Extruder 1 gekoppelt. Extruder 1, Getriebe 2 und Antriebsmotor 3 sind als verschiebbare Einheit ausgebildet, d.h. sie sind über Rollen 6 gegenüber der Innenwand 7 eines Kanalrohres abstützbar. In Arbeitsrichtung 4 ist dem Antriebsmotor 3 eine Vorschubeinheit 9 vorgeordnet, die über eine Anhängekupplung 1o mit dem Antriebsmotor 3 verbunden ist. Der Extruder 1, das Getriebe 2 und der Antriebsmotor 3 sind als räumlich selbständige Einheiten ausgebildet um eine Montage und Demontage unter den beengten Platzverhältnissen in einem Kanalrohr 8 zu ermöglichen. Gleiches gilt hinsichtlich einer dem Extruder 1 in Arbeitsrichtung 4 nachgeordneten, ebenfalls über Rollen 6 an der Innenwand 7 des Kanalrohres 8 abgestützten Rohr-Düse 11. Zumindest der Extruder 1, die Rohr-Düse 11 und die Vorschubeinheit 9 sind konzentrisch zur Mittel-Längs-Achse 12 des Kanalrohres 8 angeordnet.

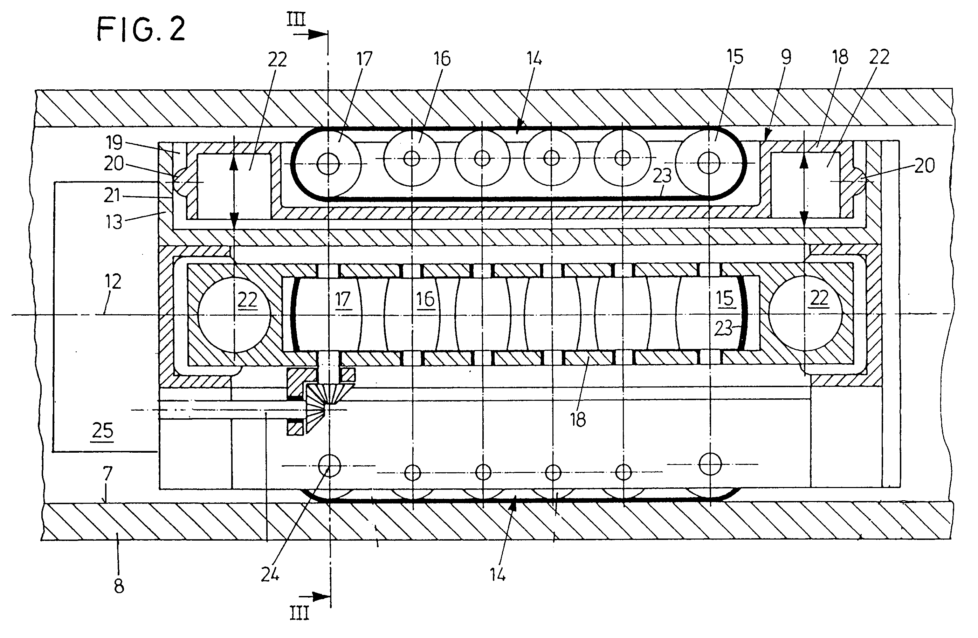

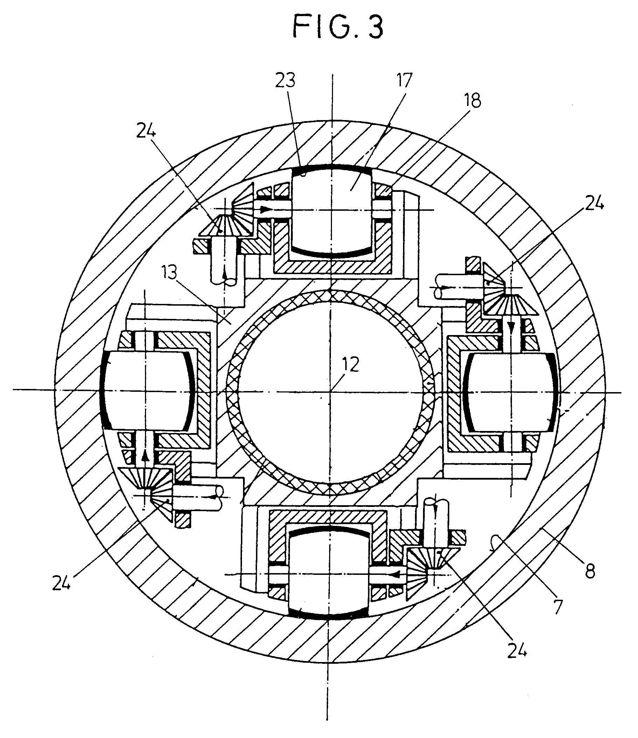

Wie Fig. 2 und 3 entnehmbar ist, weist die Vorschubeinheit 9 ein Gehäuse 13 auf, an dem vier Raupen-Fahrwerke 14 angebracht sind, die - bezogen auf die Achse 12 und in Arbeitsrichtung 4 gesehen - hintereinander eine Umlenkrolle 15, mehrere Laufrollen 16 und eine Antriebsrolle 17 aufweisen, die in einem im Querschnitt etwa U-förmigen Träger 18 gelagert sind. Dieser Träger 18 ist in einer seinem Außenquerschnitt angepaßten nutförmigen Aufnahme 19 an der Außenseite des Gehäuses 13 radial zur Achse 12 verschiebbar gelagert. In seiner Längsrichtung, also parallel zur Achse 12, ist er mittels Gleitkufen 2o an Führungsflächen 21 der Aufnahme 19 abgestützt. Im Bereich seiner beiden Enden ist er mittels Federn 22, und zwar insbesondere hydraulischer Federn, radial zur Achse 12 gegenüber dem Gehäuse 13 der Vorschubeinheit 9 abgestützt. Um die Rollen 15,16,17 ist ein endloses Läufband 23 bzw. eine Läufkette aus Gummi geschlungen. Der Antrieb der jeweiligen Antriebsrollen 17 erfolgt über ein als Kegeltrieb ausgebildetes Umlenkgetriebe 24 von einem Antriebsmotor 25.

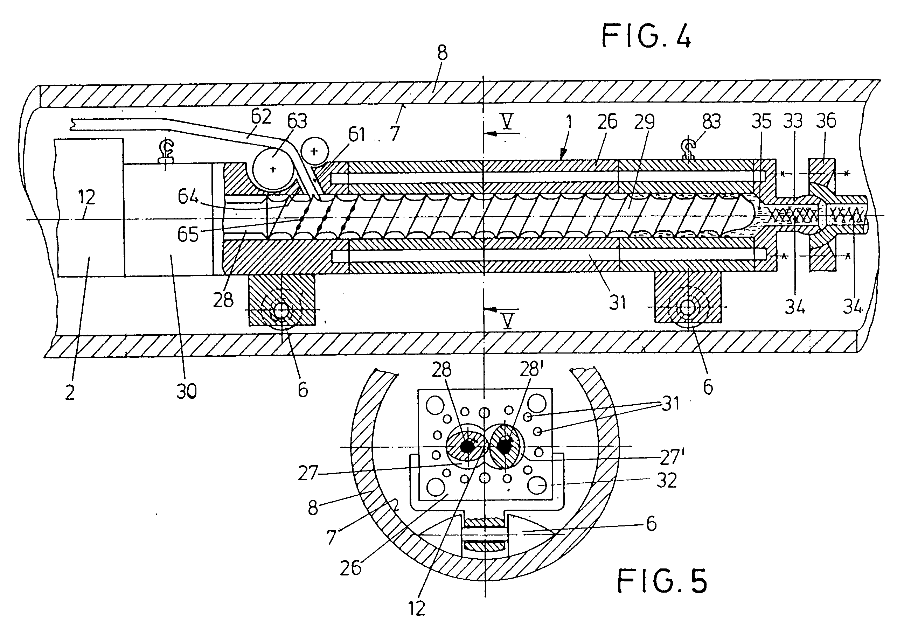

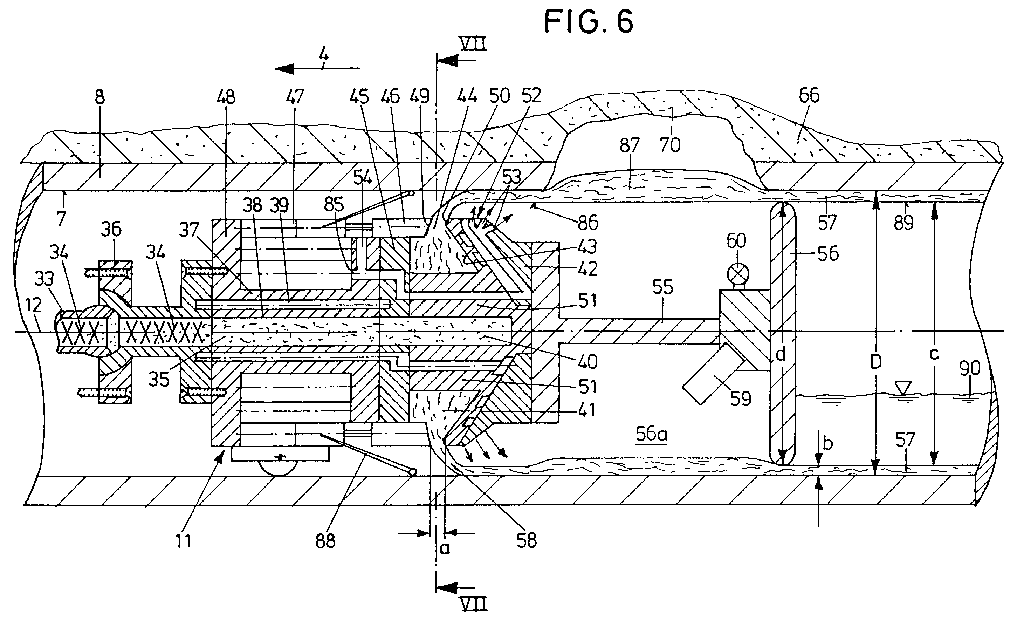

Den Fig. 4 und 5 ist im wesentlichen der Aufbau des Extruders 1 zu entnehmen. Er weist ein Gehäuse 26 auf, in dem zwei einander durchdringende und damit im Querschnitt eine Acht bildende Bohrungen 27,27' angeordnet sind. In den Bohrungen 27,27' sind zwei Schneckenwellen 28,28' mit jeweils mehreren Schneckenelementen 29 angeordnet. Zu ihrem Antrieb dient der Antriebsmotor 3 mit dem Getriebe 2, das als Verzweigungsgetriebe ausgebildet ist. Das Getriebe 2 ist an einer Radial-Axial-Lägerung 3o für die Schneckenwellen 28,28' angeflanscht. Aus Fig. 5 ist auch der Querschnitt der Rollen 6, wie sie ganz allgemein verwendet werden, ersichtlich. Sie sind in ihrer Außenkontur der Krümmung der Innenwand 7 des Kanalrohres 8 angepaßt und bewirken auf diese Weise eine Zentrierung der verschiedenen Einheiten, wie Extruder 1, Getriebe 2, Antriebsmotor 3 und Rohr-Düse 11.

Im Gehäuse 26 sind Heizkanäle 31 ausgebildet, durch die zur Beheizung des Extruders 1 Thermoöl gepumpt werden kann. Außerdem sind im Gehäuse 26 Zuganker 32 angeordnet, mittels derer das in üblicher Weise aus mehreren Gehäuseschüssen bestehende Gehäuse 26 zusammengespannt wird.

Wie Fig. 4 rechts und Fig. 6 links zu entnehmen ist, ist der Extruder 1 mit der Rohr-Düse 11 über ein Kunststoffschmelzerohr 33 verbunden, in dem ein statischer Mischer 34 angeordnet ist. Mittels des statischen Mischers 34 wird die aus den Bohrungen 27,27' des Extruders 1 kommende Kunststoffschmelze 35 intensiv gemischt und homogenisiert. Im Kunststoffschmelzerohr 33 ist eine Rohr-Gelenkkupplung 36 ausgebildet.

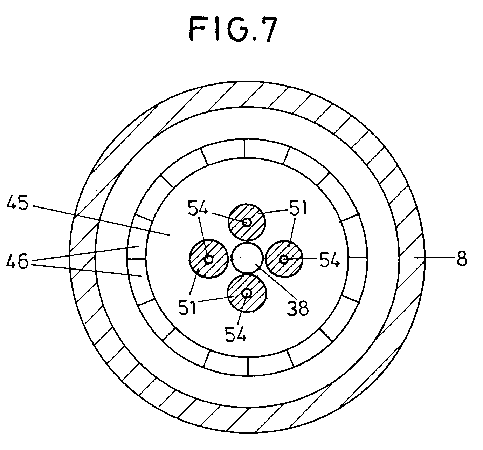

Wie aus den Fig. 6 und 7 hervorgeht, weist die Rohr-Düse 11 ein Gehäuse 37 auf, in dem ein mit dem Kunststoffschmelzerohr 33 fluchtender Kunststoffschmelze-Kanal 38 ausgebildet ist, der also konzentrisch zur Achse 12 verläuft. Dieser Kanal 38 ist von Heizkanälen 39 umgeben, durch die Thermoöl geführt wird, um die Kunststoffschmelze 35 in flüssigem Zustand zu halten. Im Bereich des Austragsendes 4o der Rohr-Düse 11 mündet der Kunststoffschmelze-Kanal 38 in einen ihn umgebenden Radial-Umlenkraum 41. Dieser wird von einer den Umlenkraum 41 stirnseitig entgegen der Arbeitsrichtung 4 abdeckenden Stirnplatte 42 mit einer Umlenkfläche 43 begrenzt. Diese Umlenkfläche 43 ist kegelstumpfförmig ausgebildet und konzentrisch zur Achse 12 angeordnet und öffnet sich in Arbeitsrichtung 4. Sie lenkt die durch den Kunststoffschmelze-Kanal 38 zugeführte Kunststoffschmelze 35 etwa radial zur Achse 12 nach außen um und führt sie zu einem Düsenspalt 44.

Der Radial-Umlenkraum 41 wird benachbart zum Gehäuse 37 der Rohr-Düse 11 durch eine sich radial erstreckende Wand 45 begrenzt, die im Bereich ihres Außenumfanges mit zahlreichen Düsensegmenten 46 versehen ist, die zu einem Ring angeordnet sind. Diese Düsen-Segmente 46 stutzen sich mittels parallel zur Achse 12 wirkenden Verstell-Einrichtungen 47 gegen ein mit dem Gehäuse 37 verbundenes Widerlager 48 ab. Bei diesen Verstell-Einrichtungen 47 kann es sich um hydraulische, pneumatische oder elektrische Linearantriebe handeln. An den Düsen-Segmenten 46 sind verstellbare Düsen-Begrenzungsflächen 49 ausgebildet. Diesen liegen ortsfeste Düsen-Begrenzungsflächen 5o gegenüber, die an der Stirnplatte 42 ausgebildet sind, und in die die Umlenkfläche 43 übergeht. Wie Fig. 7 entnehmbar ist, ist die Stirnplatte 42 mit der Umlenkfläche 43 mittels Kragarmen 51 mit der Wand 45 und damit mit dem Gehäuse 37 verbunden. Durch entsprechende Verstellung der Düsen-Segmente 46 parallel zur Achse 12 kann die Weite a des Düsenspaltes 44 eingestellt werden. Er kann hiermit auch vollkommen verschlossen werden. Anstelle der Düsen-Segmente 46 kann auch ein in der Zeichnung nicht dargestellter Messerring konzentrisch zur Achse 12 verschiebbar vorgesehen sein, mittels dessen der Düsenspalt 44 verschlossen werden kann. Ein solcher Messerring würde einen über seinen Umfang gleich dicken Kunststoffschlauch erzeugen, ohne daß Schlauchaussparungen möglich wären.

Bezogen auf die Arbeitsrichtung 4 hinter dem Düsenspalt 44 ist eine Rohr-Form- und Kühl-Einrichtung 52 vorgesehen, die eine Rohr-Form- und Kühl-Düse 53 aufweist. Sie ist in der die Umlenkfläche 43 tragenden Stirnplatte 42 als Rund- oder Schlitzdüse ausgebildet und führt im wesentlichen radial zur Achse 12 nach außen. Sie ist an Hochdruckmedium-Kanäle 54 angeschlossen, die durch das Gehäuse 37 und die Kragarme 51 geführt sind. Als Hochdruckmedium wird in der Regel Druckluft eingesetzt; es kann aber auch Hochdruck-Wasser verwendet werden.

An der Rohr-Düse 11 ist zentrisch ein sich entgegen der Arbeitsrichtung 4 erstreckender Tragarm 55 angeflanscht, der eine Trennwand 56 trägt, deren Durchmesser d dem Durchmesser D des Kanalrohres 8 gleich dem doppelten Wanddicke b eines zu erzeugenden Kunststoffrohres 57 und gegebenenfalls abzüglich eines geringen Spiels ist. Durch eine solche Trennwand 56 wird ein Druckraum 56a gebildet, in dem ein vom Hochdruckmedium her gebildeter Überdruck herrscht, der die Bildung eines Kunststoffschlauches 58 beim Austritt der Kunststoffschmelze 35 aus dem Düsenspalt 44 und das Anlegen dieses Kunststoffschlauches 58 an die Innenwand 7 des Kanalrohres 8 unterstützt.

An dem Tragarm 55 bzw. der Trennwand 56 kann auch eine Fernsehkamera 59 und eine Beleuchtung 6o angebracht sein.

Benachbart zum Getriebe 2 ist im Gehäuse 26 des Extruders 1 eine Einzugsöffnung 61 für ein Kunststoff-Band 62 vorgesehen, wie Fig. 4 entnehmbar ist. Das Kunststoff-Band 62 wird über ein Paar Antriebsrollen 63 zwangsweise zugeführt. Die Antriebsrollen 63 werden in nicht dargestellter Weise über einen entsprechenden Abzweig vom Getriebe 2 her angetrieben. Damit die Zuführung des Bandes 62 zuverlässig funktioniert, ist das Band 62 selber mit einer Oberflächenriffelung versehen. Auch die Antriebsrollen 63 sind mit einer entsprechenden Riffelung ausgestattet. Um einen Einzug von Schmutzteilen und dgl. in den Extruder 1 zu vermeiden, sind in der Einzugsöffnung 61 abdichtende, gegen das Kunststoff-Band 62 anliegende Abstreifer 64 angeordnet. Die Schneckenelemente 29 sind als Schneidschnecken mit scharfkantigen Zähnen 65 im Schneckeneinzugsbereich, also hinter der Einzugsöffnung 61, ausgebildet.

Alternativ läßt sich der Kunststoff auch als Granulat der Einzugsöffnung 61 zuführen, wobei als Fördermedium Druckluft in Betracht käme, d.h. es würde eine pneumatische Granulatförderung eingesetzt. Die Druckluft würde hierbei durch eine Schnecken-Rückwärts-Entgasung im Bereich vor der Lagerung 3o entweichen, während das Granulat den Schneckenwellen 28,28' mit Schneckenelementen 29 zugeführt würde.

Die geschilderte Vorrichtung wird - wie bereits angedeutet wurde - zum AusHeiden eines schadhaften Kanalrohres 8, d.h. zum sogenannten Kanalrohr-Relining, eingesetzt. Ein solches Kanalrohr 8 ist im Erdreich 66 verlegt. In Fig. 1 links ist ein Inspektionsschacht 67 erkennbar, der zur Erdoberfläche 68 führt. In Fig. 1 rechts ist ein in das Kanalrohr 8 einmündendes Anschlußrohr 69 dargestellt, das zu einem Haus führen kann, oder aber einen Abzweig für eine Straße bildet. In der Zeichnung sind weiterhin drei Schadstellen dargestellt, bei denen es sich um einen Ausbruch 7o, einen Versatz 71 und um Risse 72 handelt.

Zum Einführen der Vorrichtung in das Kanalrohr 8 können - wenn der Inspektionsschacht 67 zu eng ist - die Rohr-Düse 11 mit der Trennwand 56, der Fernsehkamera 59 und der Beleuchtung 6o als eine Einheit, der Extruder 1 mit Getriebe 2 als eine weitere Einheit, der Antriebsmotor 3 als eine weitere Einheit und schließlich die Vorschubeinheit 9 jeweils gesondert eingebracht werden. Sie werden dann vor oder beim Einführen in das Kanalrohr 8 zusammengekoppelt. Durch den Inspektionsschacht 67 werden von der Erdoberfläche 68 zahlreiche Versorgungsleitungen zugeführt. Hierbei handelt es sich um eine Versorgungsleitung 73 für Strom, eine Versorgungsleitung 74 für Druckluft, eine Versorgungsleitung 75 für Thermoöl, eine Versorgungsleitung 76 für Drucköl und eine Versorgungsleitung 77 für Wasser. Weiterhin werden Steuerleitungen 78 und das Kunststoff-Band 62 zugeführt. All diese Versorgungsleitungen 73 bis 77, die Steuerleitung 78 und das Kunststoff-Band 62 sind auf Trommeln 79 aufgewickelt und werden hierüber nachgeführt bzw. wieder aufgewickelt. Diese Trommeln 79 befinden sich in einem Container-Fahrzeug 8o, das mittels eines Sattelschleppers 81 verfahren werden kann. In dem Container-Fahrzeug 8o befindet sich auch ein Kran 82, mittels dessen die Rohr-Düse 11, der Extruder 1, das Getriebe 2, der Antriebsmotor 3 und die Vorschubeinheit 9 durch den Inspektionsschacht 67 abgesenkt bzw. durch diesen wieder hochgezogen werden können. Hierzu sind an den erwähnten Teilen entsprechende Haken 83 ausgebildet Das Container-Fahrzeug 8o weist eine über dem Inspektionsschacht 67 anzuordnende Bodenöffnung 84 auf.

Mit der Vorrichtung kann eine Bestandsaufnahme im Kanalrohr 8 erfolgen, indem die Vorrichtung - ohne daß der Extruder 1 in Betrieb ist - durch das Kanalrohr 8 in Arbeitsrichtung 4 verfahren wird. Hierbei wird mit der Fernsehkamera 59 eine vollständige Aufnahme des Kanalrohres 8 gemacht. Beim Hinfahren der Vorrichtung zum Ausgangspunkt, d.h. beim Einfahren der Vorrichtung entgegen der Arbeitsrichtung 4 in das Kanalrohr 8 kann dieses mittels Hochdruckwasserstrahlen gereinigt werden, die durch die Düsen 53 gesprüht werden. Hierbei werden gleichzeitig möglicherweise nicht oder nur schwer sichtbare Schadstellen wie Ausbrüche 7o, Versatz 71 oder Risse 72 freigelegt.

Zum anschließenden Auskleiden des Kanalrohres 8 wird die Vorrichtung wieder entgegen der Arbeitsrichtung 4 in eine Ausgangsstellung verbracht. Das Kunststoff-Band 62 ist zuvor in den Extruder 1 eingefädelt worden. Während des Verfahrens in Arbeitsrichtung 4 wird - bei entsprechendem Antrieb der Schneckenwellen 28,28' mittels des Antriebsmotors 3 - aus der radialen Rohr-Düse 11 ein warmplastischer Kunststoffschlauch 58 extrudiert, der sich an die Innenwand 7 des Kanalrohres 8 anlegt. Über in Arbeitsrichtung 4 dem Düsenspalt 44 voreilende Heißluftdüsen 85 wird heiße Luft gegen die Innenwand 7 des Kanalrohres 8 geblasen, wodurch dieses vorgetrocknet und vorgewärmt wird, was ein Anhaften des Kunststoffschlauches 58 an der Innenwand 7 erleichtert. Außerdem können zwischen den Heißluftdüsen 85 und dem Düsenspalt 44 nicht dargestellte zusätzliche Düsen vorgesehen sein, über die ein Haftvermittler oder ein Haftverbesserer gegen die Innenwand 7 gesprüht wird, um das Anhaften des Kunststoffschlauches 58 zu verbessern bzw. zu erleichtern.

Durch die Rohr-Form- und Kühl-Düsen 53 wird Heißluft oder alternativ Wasser unter hohem Druck gegen die Innenfläche 86 des Kunststoffschlauches 58 geblasen bzw. gesprüht, wodurch dieser gegen die Innenwand 7 des Kanalrohres 8 angepreßt wird. Gleichzeitig wird er hierdurch abgekühlt, wodurch er zu einem das Kanalrohr 8 auskleidenden Rohr 57 erstarrt.

Wenn die Vorrichtung an einer Abzweigung, wie dem Anschlußrohr 69 (siehe Fig. 1) vorbeifährt, kann der Düsenspalt 44 durch entsprechende individuelle Verstellung der Düsen-Segmente 46 teilweise kurzzeitig verschlossen werden, so daß in diesen Bereich kein Kunststoffschlauch extrudiert wird. Es erübrigt sich somit das Freifräsen dieser Abzweigung.

An einer Ausbruch-Stelle 7o können die dieser zugeordneten Düsen-Segmente 46 so verstellt werden, daß der Düsenspalt 44 in diesem Bereich verbreitert wird. An dieser Stelle wird dann mehr Kunststoff aus dem Düsenspalt 44 herausgedrückt, so daß sich eine Verdickung 87 des Kunststoffschlauches 58 und damit des Auskleidungs-Rohres 57 an dieser Stelle ergibt. Ansonsten kann durch die Verstellung der Düsen-Segmente 46 die Breite a des Düsenspaltes 44 insgesamt verstellt werden, wodurch wiederum die Wanddicke b des Auskleidungs-Rohres 57 bestimmt wird. Die Verfahrgeschwindigkeit des Extruders 1 muß naturgemäß mit der Austrittsgeschwindigkeit des Kunststoffschlauches 58 aus dem Düsenspalt 44 übereinstimmen.

Wenn am Gehäuse 37 der Rohr-Düse 11 über deren Umfang verteilt radial zur Achse 12 wirkende Weg-Taster 88 angeordnet sind, dann können Ausbrüche 7o, Versatz 71 oder Risse 72 genau lokalisiert werden und dann zu einer automatischen Steuerung der Verstell-Einrichtung 47 für die Düsen-Segmente 46 eingesetzt werden.

Die Trennwand 56 bewirkt, daß das Rohr 57 eine etwa gleichmäßige Innenwand 89 mit etwa gleichmäßigem Durchmesser c aufweist. Über die Fernsehkamera 59 wird das Arbeitsergebnis fortlaufend überprüft. Wie Fig. 6 entnehmbar ist, kann die Auskleidung des Kanalrohres 8 mit einem Auskleidungs-Rohr 57 erfolgen, während das Kanalrohr 8 im normalen Betrieb ist. Es tritt dann hinter der Trennwand 56 ein Abwasser-Rückstau 9o ein.

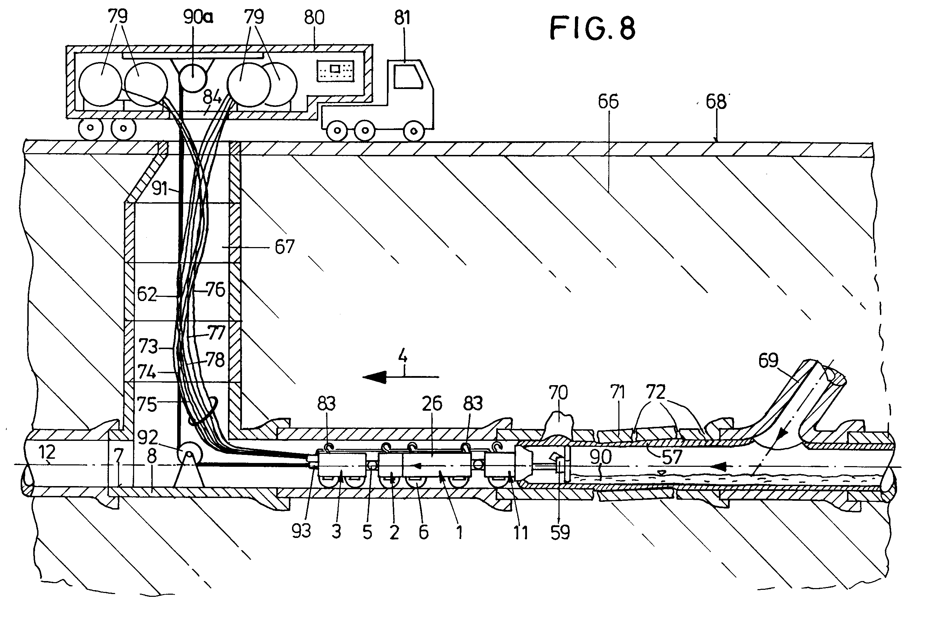

In Fig. 8 ist eine abgewandelte Ausführungsform dargestellt, die sich von der Ausführungsform nach Fig. 1 nur dadurch unterscheidet, daß nicht eine sich im Kanalrohr 8 abstützende Vorschubeinheit 9 vorgesehen ist. Als Vorschubeinheit dient hierbei eine Seilwinde 9oa, die oberhalb der Erdoberfläche 68, beispielsweise in dem Container-Fahrzeug 8o angeordnet ist. Von dieser Seilwinde 9oa führt ein Zugseil 91 zu einer Umlenkrolle 92, die am Boden des Inspektionsschachtes 67 angebracht ist, und über die das Zugseil 91 etwa fluchtend mit der Mittel-Längs-Achse 12 des Kanalrohres 8 zu dem Extruder-Antriebsmotor 3 geführt ist, an dem es mittels eines Befestigungselementes 93 angebracht ist. Mittels des Zugseiles 91 und der motorisch angetriebenen Seilwinde 9oa wird die aus Extruder 1, Getriebe 2 und Extruder-Antriebsmotor 3 und Rohr-Düse 11 gebildete Einheit in Arbeitsrichtung 4 durch das Kanalrohr 8 gezogen. Ansonsten ist die Ausgestaltung unverändert.

## Patentansprüche

1. Verfahren zum Auskleiden der Innenwand (7) eines Kanalrohres (8) mit Kunststoff, dadurch gekennzeichnet, daß der Kunststoff aufgeschmolzen und fortschreitend zu einem warmplastischen Kunststoffschlauch (58) extrudiert wird, der gegen die Innenwand (7) angedrückt und dort zu einem Auskleidungs-Rohr (57) abgekühlt wird, und daß die Innenwand (7) des Kanalrohres (8) vor dem Andrücken des Kunststoffschlauches (58) zumindest teilweise mittels Heißluft getrocknet wird.

2. Verfahren nach Anspruch 1, dadurch gekennzeichnet, daß der Kunststoffschlauch (58) mittels eines auf seine Innenfläche (86) wirkenden Druckstrahles gegen die Innenwand (7) des Kanalrohres (8) gepreßt und abgekühlt wird.

3. Verfahren nach Anspruch 1, dadurch gekennzeichnet, daß das Extrudieren des Kunststoffschlauches (58) an aus dem Kanalrohr (8) ausmündenden Anschlüssen (69) unterbrochen wird.

4. Vorrichtung zur Durchführung des Verfahrens nach einem der Ansprüche 1 bis 3, dadurch gekennzeichnet, daß ein Extruder (1) mit einer zu seiner Mittel-Längs-Achse (12) radialen Rohr-Düse (11) zum Extrudieren des Kunststoffschlauches (58) vorgesehen ist, der mittels einer Vorschubeinheit (9, 90a) in einer Arbeitsrichtung (4) fahrantreibbar ist und daß - bezogen auf die Arbeitsrichtung (4) - der Rohr-Düse (11) mindestens eine zumindest überwiegend radial zur Achse (12) gegen die Innenwand (7) des Kanalrohres (8) gerichtete Heißluftdüse (85) vorgeordnet ist.

5. Vorrichtung nach Anspruch 4, dadurch gekennzeichnet, daß der Extruder (1) mit Rollen (6) zum Verfahren in einem Kanalrohr (8) versehen ist und daß die Vorschubeinheit (9) gegenüber dem Extruder (1) selbständig und mit diesem kuppelbar ausgebildet ist.

6. Vorrichtung nach Anspruch 4, dadurch gekennzeichnet, daß - bezogen auf die Arbeitsrichtung (4) - der Rohr-Düse (11) mindestens eine radiale Rohr-Form- und Kühl-Düse (53) nachgeordnet ist.

7. Vorrichtung nach Anspruch 6, dadurch gekennzeichnet, daß die mindestens eine Rohr-Form- und Kühl-Düse (53) mit einem Hochdruckmedium, insbesondere Druckluft, beaufschlagbar ist.

8. Vorrichtung nach Anspruch 4, dadurch gekennzeichnet, daß die Rohr-Düse (11) einen in seiner Breite (a) verstellbaren ringförmigen radialen Düsenspalt (44) aufweist.

9. Vorrichtung nach Anspruch 8, dadurch gekennzeichnet, daß der radiale Düsenspalt (44) über seinen Umfang abschnittsweise in seiner Breite (a) verstellbar ist.

10. Vorrichtung nach Anspruch 4, dadurch gekennzeichnet, daß am Extruder (1) eine abnehmbare Antriebsmotor-Einheit (3) angekoppelt ist.

11. Vorrichtung nach Anspruch 4, dadurch gekennzeichnet, daß die Rohr-Düse (11) mittels einer Verschließeinrichtung (46) verschließbar ausgebildet ist.

12. Vorrichtung nach Anspruch 4, dadurch gekennzeichnet, daß zwischen Extruder (1) und Rohr-Düse (11) ein statischer Mischer (34) vorgesehen ist.

13. Vorrichtung nach Anspruch 5, dadurch gekennzeichnet, daß die Vorschubeinheit (9) mit sich an der Innenwand (7) des Kanalrohres (8) abstützenden, antreibbaren Fahrwerken (14) ausgebildet ist.

14. Vorrichtung nach Anspruch 13, dadurch gekennzeichnet, daß die Fahrwerke (14) radial zur Achse (12) verstellbar sind.

15. Vorrichtung nach Anspruch 5, dadurch gekennzeichnet, daß die Vorschubeinheit als mit einem Zugseil (91) versehene Seilwinde (9oa) ausgebildet ist, wobei das Zugseil (91) mit dem Extruder (1) verbindbar ist.

## Claims

1. Method of lining the inside wall (7) of a sewer pipe (8) with a plastic material, characterized in that the plastic material is melted and progressively extruded to form a thermoplastic tube (58), which is pressed against the inside wall (7), where it is cooled down to form a lining pipe (57), in that the inside wall (7) of the sewer pipe (8) is at least partially dried by means of hot air prior to the plastic tube (58) being applied.

2. Method according to claim 1, characterized in that the plastic tube (58) is pressed against the inside wall (7) of the sewer pipe (8) by means of a pressure jet acting on its internal surface (86) and cooled down.

3. Method according to claim 1, characterized in that the extrusion of the plastic tube (58) is interrupted where joining pipes (69) branch off the sewer pipe (8).

4. Apparatus for putting into practice the method according to one of the claims 1 to 3, characterized in that an extruder (1) with a nozzle (11) radial referred to its central longitudinal axis (12) is provided for extruding the plastic tube (58), which is drivable for displacement in an operating direction (4) by means of a feed unit (9, 90a), and in that - referred to the operating direction (4) - the nozzle (11) is preceded by at least one hot-air nozzle (85) directed towards the inside wall (7) of the sewer pipe (8) at least substantially radially in relation to the axis (12).

5. Apparatus according to claim 4, characterized in that the extruder (1) is provided with rollers (6) for displacement in a sewer pipe (8) and in that the feed unit (9) is formed to be independent of and to be coupled to, the extruder (1).

6. Apparatus according to claim 4, characterized in that - referred to the operating direction (4) - at least one radial pipe molding and cooling nozzle (53) is arranged downstream of the nozzle (11).

7. Apparatus according to claim 6, characterized in that the at least one pipe moulding and cooling nozzle (53) is actuatable by a high-pressure medium, in particular pressurized air.

8. Apparatus according to claim 4, characterized in that the nozzle (11) has an annular radial nozzle gap (44) adjustable in width (a).

9. Apparatus according to claim 8, characterized in that along its circumference and in sections the radial nozzle gap (44) is adjustable in width (a).

10. Apparatus according to claim 4, characterized in that a detachable driving-motor unit (3) is coupled to the extruder (1).

11. Apparatus according to claim 4, characterized in that the nozzle (11) is formed to be closable by means of a closing device (46).

12. Apparatus according to claim 4, characterized in that a static mixer (34) is provided between the extruder (1) and the nozzle (11).

13. Apparatus according to claim 5, characterized in that the feed unit (9) is formed to have drivable moving devices (14) supporting themselves on the inside wall (7) of the sewer pipe (8).

14. Apparatus according to claim 13, characterized in that the moving devices (14) are adjustable radially in relation to the axis (12).

15. Apparatus according to claim 5, characterized in that the feed unit is formed as a cable winch (90a) provided with a traction rope (91), the traction rope (91) being connectable with the extruder (1).

## Revendications

1. Procédé pour le revêtement de la paroi intérieure (7) d'un tuyau d'égout (8) avec de la matière plastique, caractérisé en ce que la matière plastique est fondue et progressivement extrudée pour former un tuyau flexible thermoplastique (58), qui est serré contre la paroi intérieure (7) où il est refroidi en formant un tuyau de revêtement (57), et en ce que la paroi intérieure (7) du tuyau d'égout (8) est séchée au moins partiellement par le moyen d'air chaud avant l'application par serrage du tuyau flexible en matière plastique (58).

2. Procédé selon la revendication 1, caractérisé en ce que par le moyen d'un jet agissant sur sa surface interne (86), le tuyau flexible en matière plastique (58) est serré contre la paroi intérieure (7) du tuyau d'égout (8) où il est refroidi.

3. Procédé selon la revendication 1, caractérisé en ce que l'extrusion du tuyau flexible en matière plastique (58) est interrompue où des branchements (69) dégorgent du tuyau d'égout (8).

4. Dispositif pour la mise en oeuvre du procédé selon l'une quelconque des revendications 1 à 3, caractérisé en ce qu'une extrudeuse (1) comprenant une buse de tuyau (11) radiale par rapport à son axe central longitudinal (12) est prévue pour l'extrusion du tuyau flexible en matière plastique (58), extrudeuse qui est actionnable par une unité d'avancement (9, 90a) pour le déplacement dans un sens de travail (4), et en ce qu'au moins une buse d'air chaud (85) dirigée vers la paroi intérieure (7) du tuyau d'égout (8) de façon au moins substantiellement radiale par rapport à l'axe (12), est située devant la buse de tuyau (11) - par rapport au sens de travail (4).

5. Dispositif selon la revendication 4, caractérisé en ce que l'extrudeuse (1) est pourvue de poulies (6) pour le déplacement dans un tuyau d'égout (8), et en ce que l'unité d'avancement (9) est indépendente par rapport à l'extrudeuse (1) et l'unité d'avancement (9) et l'extrudeuse (1) sont coupables.

6. Dispositif selon la revendication 4, caractérisé en ce que la buse de tuyau (11) est suivie par au moins une buse radiale refroidisseuse de moulage de tuyau (53) par rapport au sens de travail (4).

7. Dispositif selon la revendication 6, caractérisé en ce que la au moins une buse refroidisseuse de moulage de tuyau (53) est actionnable par un médium à haute pression, notamment de l'air comprimé.

8. Dispositif selon la revendication 4, caractérisé en ce que la buse de tuyau (11) présente une fente de buse (44) annulaire radiale de largeur (a) réglable.

9. Dispositif selon la revendication 8, caractérisé en ce que la fente de buse radiale (44) est de largeur (a) réglable par sections sur son circonférence.

10. Dispositif selon la revendication 4, caractérisé en ce qu' une unité de moteur de commande (3) détachable est attachée par couplage à l'extrudeuse (1).

11. Dispositif selon la revendication 4, caractérisé en ce que la buse de tuyau (11) est fermante par le moyen d'un dispositif de fermeture (46).

12. Dispositif selon la revendication 4, caractérisé en ce qu'un mélangeur statique (34) est prévu entre l'extrudeuse (1) et la buse de tuyau (11).

13. Dispositif selon la revendication 5, caractérisé en ce que l'unité d'avancement (9) comprend des chariots (14) actionnables pour le déplacement, qui s'appuient contre la paroi intérieure (7) du tuyau d'égout (8).

14. Dispositif selon la revendication 13, caractérisé en ce que les chariots (14) sont réglables radialement par rapport à l'axe (12).

15. Dispositif selon la revendication 5, caractérisé en ce que l'unité d'avancement est un treuil de manoeuvre (90a) pourvu d'un câble tracteur (91), le câble tracteur (91) étant combinable avec l'extrudeuse (1).
